# EUROPÄISCHE PATENTSCHRIFT

(11) **EP 2 196 305 B1**
(45) Veröffentlichungstag und Bekanntmachung des Hinweises auf die Patenterteilung: **29.02.2012**
(21) Anmeldenummer: 08171272.1
(22) Anmeldetag: 11.12.2008
(51) Int. Cl.: B29C 73/16

(54) **Verfahren zum Betrieb eines Pannenhilfesystems und Pannenhilfesystem**
Method for operating a breakdown assistance system and breakdown assistance system
Procédé destiné au fonctionnement d'un système de dépannage et système de dépannage

(43) Veröffentlichungstag der Anmeldung: 16.06.2010
(73) Patentinhaber: Continental Reifen Deutschland GmbH, 30165 Hannover (DE)
(72) Erfinder: Detering, Rainer, 30926, Seelze (DE); Yang, Zheng, 30171, Hannover (DE); Ernst, Gerhard, 30629, Hannover (DE); Motoasca, Mihai, 550018, Sibiu (RO); Limbasan, Petru, 550018, Sibiu (RO); Patarau, Toma, 550018, Sibiu (DE)
(74) Vertreter: Finger, Karsten

(56) Entgegenhaltungen:
- EP-A- 1 747 878
- WO-A-2006/038640

## Beschreibung

Die Erfindung betrifft ein Verfahren zum Betrieb eines mit einem Dichtmittel arbeitenden und einen Kompressor beinhaltenden Pannenhilfesystems zum Abdichten und Aufpumpen von aufblasbaren Gegenständen, wobei das Pannenhilfesystem wahlweise in den Betriebsarten "Aufpumpen" und "Aufpumpen und Dichten" arbeitet. Ebenfalls betrifft die Erfindung eine Pannenhilfesystem zum Abdichten und Aufpumpen von Kraftfahrzeugreifen zur Durchführung des erfindungsgemäßen Verfahrens.

Bei Reifenpannen besteht in aller Regel das Problem, dass - wie beispielsweise bei einem PKW bisher üblich - ein gefüllter und auf einer Felge montierter Reservereifen mitgeführt werden muss, der dann anstelle des Rades mit dem defekten Reifen montiert wird, wonach der defekte Reifen in dem für den Reservereifen vorgesehenen Stauraum im Fahrzeug befestigt werden und später einer Reparatur zugeführt werden muss. Hierzu ist es nicht nur oft notwendig, ein beladenes Fahrzeug auszuräumen, um an den entsprechenden Stauraum zu gelangen, sondern es muss auch das Fahrzeug selbst mit Wagenhebern aufgebockt und eine umständliche Reparaturarbeit durchgeführt werden.

Bei Fahrzeugen, die nicht mit schlauchlosen Reifen versehen sind, wie etwa bei Fahrrädern, ist es bei einer Reifenpanne nötigt, mit umfangreichem Werkzeug nach der Montage des Reifens den Mantel von der Felge zu entfernen, den Schlauch zu entnehmen und mit entsprechend mitgeführtem Reparaturmaterial zu flicken. Danach muss der Reifen bzw. der Schlauch oft mehrfach aufgepumpt werden, um eine einigermaßen sichere Weiterfahrt zu gewährleisten. Neben der schwierigen Reparaturtätigkeit besteht bei dem bisher bekannten Verfahren der Nachteil, dass die notwendigen Reparaturmaterialien, wie etwa eine entsprechende Pumpe sowie Hebe- und Schraubwerkzeuge, in oder bei den entsprechenden Fahrzeugen nur unvollständig oder gar nicht vorhanden oder an den unterschiedlichsten Stellen verstaut sind und lange gesucht werden müssen.

Um diese Nachteile zu vermeiden, sind bereits Reparatursätze bekannt, die einen Kompressor, ein im Reifen koagulierendes Dichtmittel, meistens ein Latexmilch-Gemisch, die entsprechenden Verbindungsschläuche und die notwendigen Kabelanschlüsse zur Energiezufuhr sowie Schalter, Manometer und Bedienelement beinhalten und somit einen ständig einsetzbaren und vollständigen Reparatursatz bereitstellen, mit dem auf das Mitführen eines auf eine Felge aufgezogenen Reserverades oder auf die ständige Kontrolle anderer Reparaturmaterialien wie Schläuche, verschiedene Werkzeugschlüssel, Wagenheber etc. verzichtet werden kann.

Die Bedienung solcher Reparatursätze ist aber auch nicht ganz einfach, insbesondere dann, wenn die Schädigungen des aufblasbaren Gegenstandes bzw. des Reifens so groß sind, dass es schwer ist, abzuschätzen, ob der aufblasbare Gegenstand abgedichtet werden kann.

So offenbart die EP 0 972 616 A2 einen Reparatursatz mit einem tragbaren Behälter zur Aufnahme von Werkzeugen, Arbeitsgeräten und Zubehör zur Instandsetzung von Reifen, der schaltbar mit einer Stromquelle verbunden und lösbar in einer Ausnehmung des Behälters angeordnet ist. Bei diesem Reparatursatz kann es passieren, dass bei einer zu großen Schädigung des Reifens entweder das Dichtmittel durch den Kompressordruck aus dem Reifen ausgetrieben wird oder aber dass ein Aufpumpen aufgrund eines zu großen Loches im Reifen nicht möglich ist. Wenn die Schädigung oder das Loch für den Bediener des Reparatursatzes nicht sichtbar oder nicht einschätzbar sind, kann eine nicht erfolgende Reparatur bzw. Abdichtung erst durch mehrfaches Ausprobieren festgestellt werden.

Die WO 2006/038640 A1 offenbart ein Verfahren gemäß dem Oberbegriff des Anspruchs 1 sowie eine Vorrichtung gemäß dem Oberbegriff des Anspruchs 5 sowie eine mit Dichtmittel arbeitende Einrichtung zum Aufpumpen von Reifen, bei der Abweichungen des Fülldrucks für den Reifen mit der Größe eines Lochs im Reifen in Relation gesetzt werden und ermittelt wird, ob das Dichtmittel in der Lage ist, das Loch abzudichten.

Die EP 1 747 878 A1 offenbart eine Pannenhilfeeinrichtung für Reifen, bei der ebenfalls ein Dichtmittel in den Reifen eingebracht wird und bei der ein Drucksensor einen für den Reifen vorgegebenen Maximaldruck überwacht und nach dessen Erreichen den Kompressor abschaltet.

Ausgehend von diesem Stand der Technik bestand für die Erfindung die Aufgabe, ein Pannenhilfesystem bereitzustellen, bei dem eine möglichst einfache und automatisierte Bedienbarkeit sichergestellt ist und ein mehrfaches Ausprobieren entfällt und bei dem vermieden wird, dass der Kompressor bis zu einer möglichen Überhitzung arbeitet.

Gelöst wird diese Aufgabe durch ein Verfahren gemäß Hauptanspruch. Weitere vorteilhafte Ausbildungen sind in den Unteransprüchen offenbart. Ein besonders geeignetes Pannenhilfesystem ist ebenfalls offenbart.

Dabei besteht das Verfahren dass die folgenden Verfahrensschritte durchgeführt werden: Einschalten des Kompressors in der Betriebsart "Aufpumpen und Dichten", Messen eines Druckes P₁ im aufblasbaren Gegenstand, Starten des Kompressors, Messen eines Druckes P₂ im aufblasbaren Gegenstand nach einer Laufzeitdauer ΔT₁ des Kompressors und bestimmen der Druckdifferenz ΔP = P₂ - P₁, Vergleichen der Druckdifferenz ΔP = P₂ - P₁, mit einem Schwellenwert für den Differenzdruck ΔAP_{Schwelle} und Zuschalten der Dichtmittelzufuhr, falls die Druckdifferenz ΔP größer oder gleich ΔP_{Schwelle} ist.

Durch ein solches Verfahren wird die Dichtmittelzufuhr erst dann erlaubt, wenn innerhalb einer bestimmten Kompressorlaufzeit eine ausreichende Druckerhöhung in dem aufblasbaren Gegenstand erreicht wird. Durch eine entsprechende Ausgestaltung des Schwellenwert für den Differenzdruck ΔP_{Schwelle} kann dann davon ausgegangen werden, dass es sich bei der Schädigung lediglich um eine solche handelt, die mit den bestehenden Möglichkeiten abgedichtet werden kann, d.h. dass die Schädigung, das Loch, der Spalt entsprechend klein sind.

In einer vorteilhaften Ausbildung des Verfahrens wird nach einer Laufzeit ΔT₂ > ΔT₁ des Kompressors der Kompressor abgeschaltet wird, falls die Druckdifferenz ΔP kleiner als ΔP_{Schwelle} ist. Damit vermeidet man, dass der Kompressor in der Betriebsart "Aufpumpen und Dichten" bis zur möglichen Überhitzung arbeitet.

In einer weiteren vorteilhaften Ausbildung des Verfahrens werden nach dem Einschalten des Kompressors in der Betriebsart "Aufpumpen und Dichten" alle weiteren Schalt-, Mess- und Vergleichsvorgänge mit Hilfe einer elektronischen Steuereinrichtung durchgeführt. Dadurch ist der Bediener des Pannenhilfesystem von allen Prüf- und Schaltfunktionen entbunden und das Verfahren läuft nach dem ersten Einschalten automatisch ab.

In einer weiteren vorteilhaften Ausbildung des Verfahrens werden in der Betriebsart "Aufpumpen" die folgenden Verfahrensschritte durchgeführt:
Einschalten des Kompressors in der Betriebsart "Aufpumpen", Messen eines Druckes P₁ im aufblasbaren Gegenstand, Starten des Kompressors, Messen eines Druckes P₂ im aufblasbaren Gegenstand nach einer Laufzeitdauer ΔT₁ des Kompressors und bestimmen der Druckdifferenz ΔP = P₂ - P₁, Vergleichen der Druckdifferenz ΔP = P₂ - P₁, mit einem Schwellenwert für den Differenzdruck ΔP_{Schwelle} und Abschalten des Kompressors, falls die Druckdifferenz ΔP kleiner als ΔP_{Schwelle} ist. Damit vermeidet man, dass der Kompressor in der Betriebsart "Aufpumpen" bei einer eventuell vorhandenen Schädigung des aufblasbaren Gegenstandes bis zu einer möglichen Überhitzung arbeitet. Die meisten Reparatursätze sind nämlich auch gut dazu geeignet, ohne Dichtmitteleinsatz lediglich zum Aufblasen von Reifen, Schlauchbooten, Luftmatratzen, etc. eingesetzt zu werden. Aufgrund der heutzutage nur noch selten auftretenden Reifenpannen werden die Reparatursätze in der Regel häufiger für solche Freizeitzwecke gebraucht als für Notfälle.

Durch eine solche Ausbildung des Verfahrens ist es auch sichergestellt, dass in dem Fall, in dem sich die Druckdifferenz nicht mehr oder nur noch unwesentlich ändert, nachdem der Gegenstand auf den Solldruck aufgeblasen wurde, ebenfalls der Kompressor abschaltet. Somit wird verhindert, dass ein Ball, der aufgeblasen wird, bis zum Platzen aufgeblasen wird.

Es wird zusätzlich zur Druckmessung eine Temperaturmessung des Kompressors durchgeführt und der Kompressor bei Überschreitung einer festgelegten Temperaturschwelle abgeschaltet wird. Damit ergibt sich eine zusätzliche Sicherheit gegen thermische Überlastung des Kompressors.

In besonderer Weise zur Durchführung des erfindungsgemäßen Verfahrens ist ein Pannenhilfesystem zum Abdichten und Aufpumpen von Kraftfahrzeugreifen geeignet, welches folgende Einrichtungen umfasst: eine Druckgasquelle, einen Behälter für ein in den Kraftfahrzeugreifen einfüllbares selbsttätiges Dichtmittel, geeignete Verbindungsmittel und Leitungen zur Verbindung zwischen Druckgasquelle, Behälter und Kraftfahrzeugreifen, elektrisch und/oder manuell betätigbare Ventil- und Schaltelemente, Temperatur- und Druckmesselemente in den Einrichtungen, insbesondere in den Verbindungsmitteln und Leitungen, eine elektronische Steuerungseinrichtung, weitere Anzeige-, Kontroll- und Bedienungselemente zur Betätigung der Einrichtungen, wobei die elektronische Steuerungseinrichtung Eingangssignale von den Temperatur- und Druckmesselemente in einer Ablaufsteuerung zur Durchführung des Verfahrens verarbeitet und Ausgangssignale zur Schaltung der elektrisch betätigbaren Ventil- und Schaltelemente ausgibt. Ein solches Pannenhilfesystem lässt sich leicht in jedem Kraftfahrzeug mitführen, ist bei Notsituationen stets zur Hand und arbeitet nach einmaligem Einschalten völlig selbständig.

Die elektronische Steuerungseinrichtung weist einen programmierbaren Mikroprozessor auf, etwa einen Prozessor, der über ein so genanntes "Flashen" mit unterschiedlichen Ablaufprogrammen, d.h. mit unterschiedlicher Software ausgestattet werden kann.

Das Pannenhilfesystem kann Anzeige-, Kontroll- und Bedienungselemente etwa in Form von Displays aufweisen, die den Bediener über den augenblicklichen Zustand der Reparatur informieren oder auch Hinweise zum Gebrauch des Pannenhilfesystems geben oder zu bestimmten weiteren Tätigkeiten auffordern.

## Patentansprüche

1. Verfahren zum Betrieb eines mit einem Dichtmittel arbeitenden und einen Kompressor beinhaltenden Pannenhilfesystems zum Abdichten und Aufpumpen von aufblasbaren Gegenständen, wobei das Pannenhilfesystem wahlweise in den Betriebsarten "Aufpumpen" und "Aufpumpen und Dichten" arbeitet und die Verfahrenweise in der Betriebsart "Aufpumpen und Dichten" durch die folgenden Verfahrensschritte **gekennzeichnet** ist:
- Einschalten des Kompressors in der Betriebsart "Aufpumpen und Dichten",
- Messen eines Druckes P₁ im aufblasbaren Gegenstand,
- Starten des Kompressors,
- Messen eines Druckes P₂ im aufblasbaren Gegenstand nach einer Laufzeitdauer ΔT₁ des Kompressors und bestimmen der Druckdifferenz ΔP = P₂ - P₁,
- Vergleichen der Druckdifferenz ΔP = P₂ - P₁, mit einem Schwellenwert für den Differenzdruck ΔP_{Schwelle} und
- Zuschalten der Dichtmittelzufuhr, falls die Druckdifferenz ΔP größer oder gleich ΔP_{Schwelle} ist,
**dadurch gekennzeichnet, dass** eine Temperaturmessung des Kompressors durchgeführt wird und der Kompressor bei Überschreitung einer festgelegten Temperaturschwelle abgeschaltet wird.

2. Verfahren nach Anspruch 1, bei dem nach einer Laufzeit ΔT₂ > ΔT₁ des Kompressors der Kompressor abgeschaltet wird, falls die Druckdifferenz ΔP kleiner als ΔP_{Schwelle} ist.

3. Verfahren nach Anspruch 1 oder 2, bei dem nach dem Einschalten des Kompressors in der Betriebsart "Aufpumpen und Dichten" alle weiteren Schalt-, Mess- und Vergleichsvorgänge mit Hilfe einer elektronischen Steuereinrichtung durchgeführt werden.

4. Verfahren nach Anspruch 1, bei dem die Verfahrenweise in der Betriebsart "Aufpumpen" durch die folgenden Verfahrensschritte **gekennzeichnet** ist:
- Einschalten des Kompressors in der Betriebsart "Aufpumpen",
- Messen eines Druckes P₁ im aufblasbaren Gegenstand,
- Starten des Kompressors,
- Messen eines Druckes P₂ im aufblasbaren Gegenstand nach einer Laufzeitdauer ΔT₁ des Kompressors und bestimmen der Druckdifferenz ΔP = P₂ - P₁,
- Vergleichen der Druckdifferenz ΔP = P₂ - P₁, mit einem Schwellenwert für den Differenzdruck ΔP_{Schwelle} und
- Abschalten des Kompressors, falls die Druckdifferenz ΔP kleiner als ΔP_{Schwelle} ist.

5. Pannenhilfesystem zum Abdichten und Aufpumpen von Kraftfahrzeugreifen, welches folgende Einrichtungen umfasst:
- eine Druckgasquelle,
- einen Behälter für ein in den Kraftfahrzeugreifen einfüllbares selbsttätiges Dichtmittel,
- geeignete Verbindungsmittel und Leitungen zur Verbindung zwischen Druckgasquelle, Behälter und Kraftfahrzeugreifen,
- elektrisch, pneumatisch, magnetisch und/oder manuell betätigbare Ventil- und Schaltelemente,
- Temperatur- und Druckmesselemente in den Einrichtungen,
- eine elektronische Steuerungseinrichtung,
- weitere Anzeige-, Kontroll- und Bedienungselemente zur Betätigung der Einrichtungen, **dadurch gekennzeichnet, dass**
- die elektronische Steuerungseinrichtung einen programmierbaren Mikroprozessor aufweist, und dafür ausgelegt ist, Eingangssignale von den Temperatur- und Druckmesselementen in einer Ablaufsteuerung zur Durchführung des Verfahrens nach Anspruch 1 bis 5 zu verarbeiten und Ausgangssignale zur Schaltung der elektronisch betätigbaren Ventil- und Schaltelemente auszugeben.

6. Pannenhilfesystem nach Anspruch 5, welches ein elektronisches Display zur Anzeige der Funktion, des Geräte- oder Verfahrenszustandes oder zur Anzeige von Bedienungsanweisungen aufweist.

## Claims

1. Method for operating a breakdown assistance system, operating with a sealant and having a compressor, for sealing and inflating inflatable objects, in which the breakdown assistance system operates optionally in the operating modes of "inflate" and "inflate and seal", and the mode of operation in the operating mode of "inflate and seal" is **characterized by** the following method steps:
- switch on the compressor in the operating mode of "inflate and seal",
- measure a pressure P₁ in the inflatable object,
- start the compressor,
- measure a pressure P₂ in the inflatable object after a run time ΔT₁ of the compressor, and determine the pressure difference ΔP = P₂ - P₁,
- compare the pressure difference ΔP = P₂ - P₁, with a threshold value for the pressure differential ΔP_{threshold}, and
- connect the sealant supply if the pressure difference ΔP is greater than or equal to ΔP_{threshold},
**characterized in that** a temperature measurement of the compressor is carried out, and the compressor is switched off upon overshooting of a designated temperature threshold.

2. Method according to Claim 1, in which after a run time ΔT₂ > ΔT₁ of the compressor, the compressor is switched off if the pressure difference ΔP is smaller than ΔP_{threshold}.

3. Method according to Claim 1 or 2, in which after the compressor has been switched on in the operating mode of "inflate and seal", all other switching, measuring and comparing processes are carried out with the aid of an electronic control device.

4. Method according to Claim 1, in which the mode of operation in the operating mode of "inflate" is **characterized by** the following method steps:
- switch on the compressor in the operating mode of "inflate",
- measure a pressure P₁ in the inflatable object,
- start the compressor,
- measure a pressure P₂ in the inflatable object after a run time ΔT₁ of the compressor, and determine the pressure difference ΔP = P₂ - P₁,
- compare the pressure difference ΔP = P₂ - P₁, with a threshold Value for the pressure differential ΔP_{threshold}, and
- switch off the compressor if the pressure difference ΔP is smaller than ΔP_{threshold}.

5. Breakdown assistance system for sealing and inflating motor vehicle tyres, which comprises the following devices:
- a pressure gas source,
- a container for an automatic sealant which can be filled into the motor vehicle tyre,
- suitable connecting means and lines for connection between pressure gas source, container and motor vehicle tyre,
- valve elements and switching elements which can be actuated electrically, pneumatically, magnetically and/or manually,
- temperature and pressure measuring elements in the devices,
- an electronic control device, and
- further display, control and operating elements for actuating the devices,
- **characterized in that** the electronic control device has a programmable microprocessor, and is designed so as to process input signals from the temperature and pressure measuring elements in a sequence controller for carrying out the method according to Claims 1 to 5, and to output output signals for switching the electronically actuatable valve elements and switching elements.

6. Breakdown assistance system according to Claim 5, which has an electronic display for displaying the function, the state of instruments or methods, or to display operating instructions.

## Revendications

1. Procédé de conduite d'un système d'assistance aux pannes travaillant avec un agent d'étanchéité et contenant un compresseur pour rendre étanche et gonfler des objets gonflables,
le système d'assistance aux pannes travaillant sélectivement dans les modes de fonctionnement "gonflage" et "gonflage et étanchéité", le mode opératoire en mode de fonctionnement "gonflage et étanchéité" étant **caractérisé par** les étapes suivantes :
- branchement du compresseur en mode de fonctionnement "gonflage et étanchéité",
- mesure d'une pression P₁ dans l'objet gonflable,
- lancement du compresseur,
- mesure d'une pression P₂ dans l'objet gonflable après une durée ΔT₁ de fonctionnement du compresseur et détermination de la différence de pression ΔP = P₂ - P₁,
- comparaison de la différence de pression ΔP = P₂ - P₁ avec une valeur de seuil ΔP_{Schwelle} de la différence de pression et
- branchement de l'apport d'agent d'étanchéité au cas où la différence de pression ΔP est supérieure ou égale à ΔP_{Schwelle},
**caractérisé en ce que**
la température de compression est mesurée et
**en ce qu'**en cas de dépassement d'un seuil de température défini, le compresseur est débranché.

2. Procédé selon la revendication 1, dans lequel après une durée de fonctionnement ΔT₂ > ΔT₁ du compresseur, le compresseur est débranché au cas où la différence de pression ΔP est inférieure à ΔP_{Schwelle}.

3. Procédé selon les revendications 1 ou 2, dans lequel après le branchement du compresseur en mode de fonctionnement "gonflage et étanchéité", toutes les autres opérations de commutation, de mesure et de comparaison sont exécutées à l'aide d'un dispositif de commande électronique.

4. Procédé selon la revendication 1, dans lequel le mode opératoire en mode de fonctionnement "gonflage" est **caractérisé par** les étapes suivantes :
- branchement du compresseur en mode de fonctionnement "gonflage",
- mesure d'une pression P₁ de l'objet gonflable,
- lancement du compresseur,
- mesure d'une pression P₂ dans l'objet gonflable après une durée de fonctionnement ΔT₁ du compresseur et détermination de la différence de pression ΔP = P₂ - P₁,
- comparaison de la différence de pression ΔP = P₂ - P₁ avec une valeur de seuil de la différence de pression Δ_{Schwelle} et
- débranchement du compresseur au cas où la différence de pression ΔP est inférieure à ΔP_{Schwelle}.

5. Système d'assistance aux pannes apte à rendre étanche et gonfler des bandages de roue de véhicule, le système présentant les dispositifs suivants :
- une source de gaz sous pression,
- un récipient d'agent d'étanchéité agissant de manière autonome et apte à être introduit dans le bandage de roue de véhicule,
- des moyens de liaison et des conduits de liaison appropriés entre la source de gaz sous pression, le récipient et le bandage pour roue de véhicule,
- des éléments de soupape et de commutation aptes à être actionnés par voie électrique, pneumatique, magnétique et/ou manuelle,
- des éléments de mesure de température et de pression dans les dispositifs,
- un dispositif de commande électronique,
- d'autres éléments d'affichage, de contrôle et de commande utilisés pour actionner le dispositif, **caractérisé en ce que**
le dispositif de commande électronique présente un microprocesseur programmable et est conçu pour traiter des signaux d'entrée provenant des éléments de mesure de température et de pression dans une commande du déroulement en vue d'exécuter le procédé selon la revendication 1 à 5 et pour délivrer des signaux de sortie permettant de commuter les éléments de soupape et de commutation actionnés électroniquement.

6. Système d'assistance aux pannes selon la revendication 5, qui présente un affichage électronique permettant d'afficher le fonctionnement, l'état de l'appareil ou du procédé ou d'afficher des indications d'utilisation.
